(19) Europäisches Patentamt / European Patent Office / Office européen des brevets

(11) **EP 3 779 372 A1**

(12) **EUROPEAN PATENT APPLICATION**
published in accordance with Art. 153(4) EPC

(43) Date of publication:
**17.02.2021 Bulletin 2021/07**

(51) Int Cl.:
**G01F 1/34** (2006.01)

(21) Application number: **18912875.4**

(22) Date of filing: **28.03.2018**

(86) International application number:
**PCT/JP2018/012821**

(87) International publication number:
**WO 2019/186783 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Kobata Gauge Mfg. Co. Ltd.**
**Osaka-shi, Osaka 551-0021 (JP)**

(72) Inventors:
• **SUZUKI, Hiroshi**
  **Osaka-shi, Osaka 5510021 (JP)**
• **KOBATA, Iwao**
  **Osaka-shi, Osaka 5510021 (JP)**
• **NAKAYA, Mitsuyoshi**
  **Osaka-shi, Osaka 5510021 (JP)**

(74) Representative: **Hering, Hartmut**
**Patentanwälte**
**Berendt, Leyh & Hering**
**Innere Wiener Strasse 20**
**81667 München (DE)**

(54) **FLOW-RATE MEASUREMENT DEVICE AND FLOW-RATE MEASUREMENT METHOD**

(57) Provided are a flow rate measurement device and a flow rate measurement method capable of accurately measuring flow rates not only in a turbulent flow region but also in a laminar flow region and a transition region. A processor includes: a parameter generator that obtains a reference differential pressure in a flow rate calculation formula of expression 1 as follows, based on already-known flow rates and measured differential pressures corresponding thereto, and generates two parameter sets each including coefficients c1 to c3 of the flow rate calculation formula, with the reference differential pressure being a boundary; a differential pressure determination unit that selects one of the two parameter sets by comparing a measured differential pressure of a fluid as a measurement target with the reference differential pressure; and a flow rate calculator that calculates a flow rate of the fluid from the parameter set and the measured differential pressure.

$$\Delta P = c1 \times \eta \times Q + c2 \times \rho \times Q^2 + c3 \cdots \text{(expression 1)}$$

(Q: flow rate, $\Delta P$: differential pressure, $\eta$: coefficient of kinematic viscosity, $\rho$: density, c1 to c3: coefficients)

Fig.6

EP 3 779 372 A1

**Description**

TECHNICAL FIELD

The present invention relates to a flow rate measurement device and a flow rate measurement method. More specifically, the invention relates to a flow rate measurement device including: a measuring instrument for measuring a differential pressure between a first pressure in a first pressure receiver of a tube body in which a fluid flows, and a second pressure in a second pressure receiver of the tube body; and a processor for calculating the flow rate of the fluid on the basis of a measured differential pressure. The invention also relates to a flow rate measurement method.

BACKGROUND ART

A conventional example of the flow rate measurement device as described above has been disclosed in Patent Document 1. This device measures the flow rate of a fluid by using a differential pressure between a static pressure that is measured in a static pressure measurement hole provided in a guide path, and a wake pressure that is measured in a wake pressure detection tube. Flow of a fluid includes a laminar flow region, a turbulent flow region, and a transition region therebetween where the laminar flow region changes to the turbulent flow region. However, in the differential pressure type flowmeter, calculation of a flow rate is not performed in consideration of the state of the fluid, and therefore, further improvement of measurement accuracy has been desired.

CITATION LIST

[PATENT DOCUMENTS]

[PATENT DOCUMENT 1] Japanese Utility Model Registration No. 3200638

SUMMARY OF THE INVENTION

PROBLEMS TO BE SOLVED BY THE INVENTION

In view of the circumstances described above, an object of the present invention is to provide a flow rate measurement device and a flow rate measurement method which are able to accurately measure flow rates not only in the turbulent flow region but also in the laminar flow region and the transition region.

SOLUTION TO THE PROBLEMS

In order to achieve the above object, a flow rate measurement device according to the present invention is provided with: a measurement instrument configured to measure a differential pressure between a first pressure in a first pressure receiver of a tube body in which a fluid flows, and a second pressure in a second pressure receiver of the tube body; and a processor configured to calculate a flow rate of the fluid on the basis of a measured differential pressure. In this configuration, the processor includes: a parameter generator configured to obtain a reference differential pressure in a flow rate calculation formula according to expression 1 as follows, on the basis of a plurality of already-known flow rates and measured differential pressures corresponding to the respective already-known flow rates, and generate two parameter sets each including coefficients c1 to c3 of the flow rate calculation formula, with the reference differential pressure being a boundary; a differential pressure determination unit configured to select one of the two generated parameter sets by comparing a measured differential pressure of a fluid as a measurement target with the reference differential pressure; and a flow rate calculator configured to calculate a flow rate of the fluid by substituting the selected parameter set and the measured differential pressure into the flow rate calculation formula:

$$\Delta P = c1 \times \eta \times Q + c2 \times \rho \times Q^2 + c3 \cdots \text{(expression 1)}$$

(Q: flow rate, $\Delta P$: differential pressure, $\eta$: coefficient of kinematic viscosity, $\rho$: density, c1 to c3: coefficients)

Meanwhile, the fluid flowing inside the tube body has: a laminar flow region in which viscous force is dominant and therefore the fluid flows smoothly and stably with no vortex; a turbulent flow region in which inertial force is dominant and therefore various vortexes are generated; and a transition region, between the laminar flow region and the turbulent flow region, in which viscous force and inertial force coexist. A differential pressure $\Delta P$ of this fluid is obtained by the flow rate calculation formula expressed by the quadratic function of the flow rate Q as shown in expression 1. Here, $c1 \times \eta \times Q$ is referred to as a viscosity term and $c2 \times \rho \times Q^2$ is referred to as an inertial term. The laminar flow region and the turbulent flow region have different states of flow of the fluid, and the dependences thereof on the viscosity term and the inertial term in the flow rate calculation formula are different from each other.

According to the above configuration, the reference differential pressure in the flow rate calculation formula according to expression 1 is obtained based on the plurality of already-known flow rates and the measured differential pressures corresponding to the respective already-known flow rates, and the two parameter sets each including the coefficients c1 to c3 of the flow rate calculation formula are generated with the reference differential pressure being the boundary. Thus, with the reference pressure being the boundary, the flow rate calculation formula is divided into a range where laminar flow separation hardly occurs (where the flow rate is small) and a range where laminar flow separation occurs (where the flow rate is large), and the coefficients of the flow rate calculation formula are generated in each range. Therefore, the parameter sets as the coefficients can be generated according to the state of flow of the fluid in the vicinity of the outer peripheral surface of a columnar member. Then, one of the two parameter sets generated is selected by comparing the measured differential pressure of the fluid as the measurement target with the reference differential pressure, and the flow rate of the fluid is calculated by substituting the selected parameter set and the measured differential pressure into the flow rate calculation formula. Therefore, the flow rate can be calculated based on the parameters according to the state of the fluid as the measurement target, whereby calculation accuracy is improved. Moreover, since different parameters are generated with the reference differential pressure as the boundary, calculation accuracy in a region where the flow rate is small so that the transition region and the laminar flow region are included is also improved. Therefore, highly accurate measurement of flow rates is achieved not only in the turbulent flow region but also in the laminar flow region and the transition region.

In the above configuration, the tube body includes, inside thereof, the columnar member extending in a direction perpendicular to a flow direction of the fluid. Preferably, the first pressure receiver is a first measurement hole provided on an upstream side, in the flow direction, of the columnar member, and the second pressure receiver is a second measurement hole provided on a downstream side, in the flow direction, of the columnar member. Preferably, the columnar member has a streamline shape that is line symmetric with respect to a first plane that is perpendicular to a center axis of the tube body and passes the center of a length, along the flow direction, of the columnar member. Preferably, the first measurement hole and the second measurement hole are arranged in symmetry with respect to the first plane. Since the columnar member provided in the tube body so as to extend in the direction perpendicular to the flow direction of the fluid has the streamline shape that is line symmetric with respect to the first plane that passes the center of the length along the flow direction, the fluid that flows along the streamline shape causes a laminar flow and a turbulent flow. In the columnar member, the first measurement hole as the first pressure receiver is provided on the upstream side in the flow direction and the second measurement hole as the second pressure receiver is provided on the downstream side in the flow direction such that these holes are line symmetric with respect to the first plane. Since this configuration allows the columnar member to have bidirectionality with respect to the flow direction of the fluid, the parameters need not be reset in accordance with the flow direction. Therefore, even when the flow direction of the fluid is reversed, distribution of changes (changes in speed, pressure, etc.) of the fluid due to the columnar member also becomes symmetric with respect to the first plane, whereby the flow rate can be measured by using the same parameter set regardless of the flow direction of the fluid.

The columnar member is preferably line symmetric with respect to a second plane that includes a center axis of the tube body and is parallel to the direction along which the columnar member extends. Thus, the pressure applied to the columnar member from the fluid is substantially symmetrically uniform with respect to the second plane, whereby the measurement accuracy is improved, and the durability of the columnar member is also improved.

Preferably, the columnar member, which is projected on a third plane that is perpendicular to the first plane and the second plane, has a shape with an outer peripheral surface that is defined by expression 2 and expression 3 as follows:

$$L = 2(K + r) \cdots \text{(expression 2)}$$

$$d = 2(K(1/\cos\theta - \tan\theta) + r) \cdots \text{(expression 3)}$$

(O: origin point, d: width of the columnar member, L: length of the columnar member in the flow direction, r: radius of an arc centered around point a that is $\pm K$ away from the origin point O in the flow direction, $\theta$: center angle of the arc/2)

According to the above expressions 2 and 3, the width d of the columnar member in the tube diameter direction depends on the center angle of the arc. By adjusting the length of the columnar member in the flow direction and the center angle of the arc, the columnar member is allowed to have a shape that can control pressure loss and occurrence of turbulent flow and can improve measurement accuracy.

The length of the columnar member in the direction along which the columnar member extends in the tube body is preferably smaller than the diameter of the tube body. Thus, a gap, through which the fluid can flow down, is formed between the tube wall and an end portion of the columnar member in the extending direction, whereby the ratio of the columnar member to the cross section of the tube body perpendicular with respect to the flow direction of the fluid is reduced. Therefore, pressure loss of the fluid due to the columnar member can be reduced, and measurement accuracy can be ensured.

The first measurement hole and the second measurement hole are preferably positioned on the center axis of the tube body. Thus, the differential pressure is measured at the center position where the pressure due to the fluid flowing in the tube body is highest, whereby measurement accuracy of the flow rate is improved.

The columnar member is solid, and tubular communication paths communicating with the measurement instrument may be formed in the first measurement hole and the second measurement hole, respectively. Since the columnar member is solid, measurement accuracy can be ensured while ensuring strength (resistance) against the fluid.

In any one of the above configurations, the fluid is preferably breathing air. Since the columnar member has bidirectionality as described above, the flow rate measurement device of the present invention can be implemented as a breath measurement device, for example. Alternatively, the fluid may be medical gas.

The flow rate measurement device may further include a columnar member extending in a direction perpendicular to the flow direction of the fluid. The first pressure receiver may be a first opening provided through the tube wall of the tube body. The columnar member may be positioned on the downstream side in the flow direction relative to the first opening. The second pressure receiver may be a second opening provided on the downstream side of the columnar member.

The tube body may have, on the tube wall, an orifice that reduces the tube path. The first pressure receiver may be a first opening provided in the tube wall on the upstream side in the flow direction of the fluid relative to the orifice. The second pressure receiver may be a second opening provided in the tube wall on the downstream side in the flow direction of the fluid relative to the orifice.

In order to achieve the above object, a flow rate measurement method according to the present invention is a method for measuring a differential pressure between a first pressure in a first pressure receiver of a tube body in which a fluid flows and a second pressure in a second pressure receiver of the tube body, and calculating a flow rate of the fluid on the basis of a measured differential pressure. The method includes: causing a fluid to flow in the tube body at a plurality of already-known flow rates; obtaining a reference differential pressure in a flow rate calculation formula according to expression 4 as follows, on the basis of the plurality of already-known flow rates and measured differential pressures corresponding to the respective already-known flow rates, and generating two parameter sets each including coefficients $c_1$ to $c_3$ of the flow rate calculation formula, with the reference differential pressure being a boundary; causing a fluid as a measurement target to flow in the tube body; selecting one of the two generated parameter sets by comparing a measured differential pressure of the fluid as the measurement target with the reference differential pressure; and calculating a flow rate of the fluid by substituting the selected parameter set and the measured differential pressure into the flow rate calculation formula:

$$\Delta P = c_1 \times \eta \times Q + c_2 \times \rho \times Q^2 + c_3 \cdots \text{(expression 4)}$$

(Q: flow rate, $\Delta P$: differential pressure, $\eta$: coefficient of kinematic viscosity, $\rho$: density, $c_1$ to $c_3$: coefficients)

ADVANTAGEOUS EFFECTS OF THE INVENTION

The features of the flow rate measurement device and the flow rate measurement method according to the present invention realize highly accurate measurement of flow rates not only in the turbulent flow region but also in the laminar flow region and the transition region.

Other objects, configurations, and effects of the present invention will become apparent from the following description of embodiments of the present invention.

BRIEF DESCRIPTION OF THE DRAWINGS

[FIG. 1] FIG. 1 is a perspective view showing a flow rate measurement device according to the present invention.

[FIG. 2] FIG. 2 schematically shows a tube path in the flow rate measurement device, where (a) is a front view, (b) is a vertical cross-sectional view, and (c) is a horizontal cross-sectional view.

[FIG. 3] FIG. 3 is a schematic view showing the correspondence relationship between a columnar member and first to third planes.

[FIG. 4] FIG. 4 is a schematic diagram showing the correspondence relationship between the columnar member and expressions 2 and 3.

[FIG. 5] FIG. 5 is a block diagram showing the flow rate measurement device.

[FIG. 6] FIG. 6 is a graph schematically showing the relationship between a reference differential pressure $\Delta P$, data groups A1 and A2, and parameter sets B1 and B2.

[FIG. 7] FIG. 7 is a diagram showing comparison of the rate of concordance between a calculated value and a measured value obtained for two parameter sets, with that obtained for one parameter set.

[FIG. 8] FIG. 8 is a diagram corresponding to FIG. 2, according to another embodiment of the present invention.

[FIG. 9] FIG. 9 is a diagram corresponding to (b) of FIG. 2, according to still another embodiment of the present invention.

[FIG. 10] FIG. 10 is a diagram corresponding to (b) of FIG. 2, according to yet another embodiment of the present invention.

## DESCRIPTION OF EMBODIMENTS

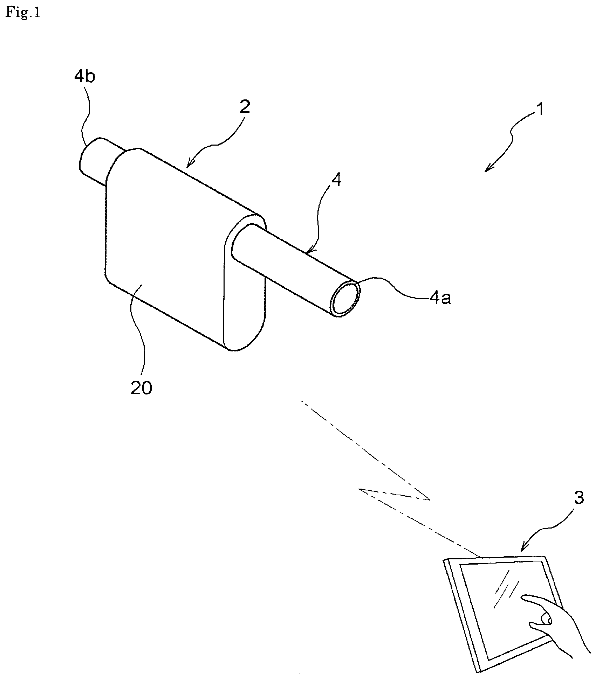

Next, the present invention will be described in more detail with reference to FIGS. 1 to 7.

As shown in FIG. 1, a flow rate measurement device 1 according to the present invention roughly includes: a measuring instrument 2 that measures a differential pressure $\Delta P$ in a tube body 4 in which a fluid flows; and a processor 3 that calculates a flow rate Q of the fluid on the basis of a measured differential pressure $\Delta P$. In this embodiment, the fluid is breathing air of a human body.

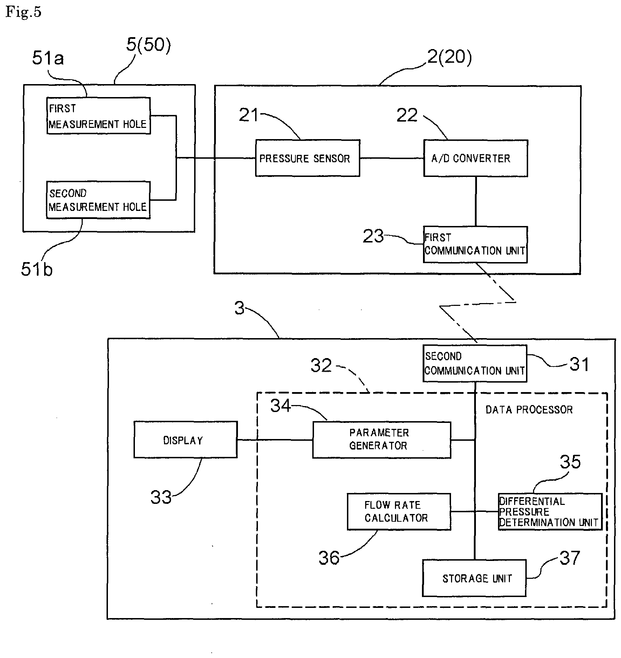

As shown in FIG. 5, the measuring instrument 2 includes: a pressure sensor 21 that measures a first pressure in a first pressure receiver 51a described later and a second pressure in a second pressure receiver 51b described later; an A/D converter 22 that converts a signal measured by the pressure sensor 21 into digital data; and a first communication unit 23 that transmits the digital data obtained in the A/D converter 22 to a second communication unit 31 of the processor 3. While wireless communication means such as Bluetooth (registered trademark) is used for communication with the processor 3 in the example of FIG. 5, wired data communication may be performed.

As shown in FIG. 5, the processor 3 includes: the second communication unit 31 that receives the digital data transmitted from the first communication unit 23; a data processor 32 that performs data processing on the received digital data; and a display 33 that displays the processed data and the like. As the processor 3, a mobile terminal such as a tablet or a smartphone, or a personal computer (PC) can be used.

As shown in FIG. 5, the data processor 32 includes: a parameter setting unit 34 that obtains a reference differential pressure $\Delta P'$ described later, and sets two parameter sets B, each including coefficients c1 to c3 of a flow rate calculation formula, with the reference differential pressure $\Delta P'$ as a boundary; a differential pressure determination unit 35 that selects one of the two parameter sets by comparing a measured differential pressure $\Delta P$ of a fluid as a measurement target with the reference differential pressure $\Delta P'$; and a flow rate calculator 36 that calculates a flow rate Q of the fluid by substituting the selected parameter set and the measured differential pressure $\Delta P$ into the flow rate calculation formula. The data processor 32 further includes a storage unit 37 that stores therein the received digital data, the set parameters, the calculated flow rate Q, etc.

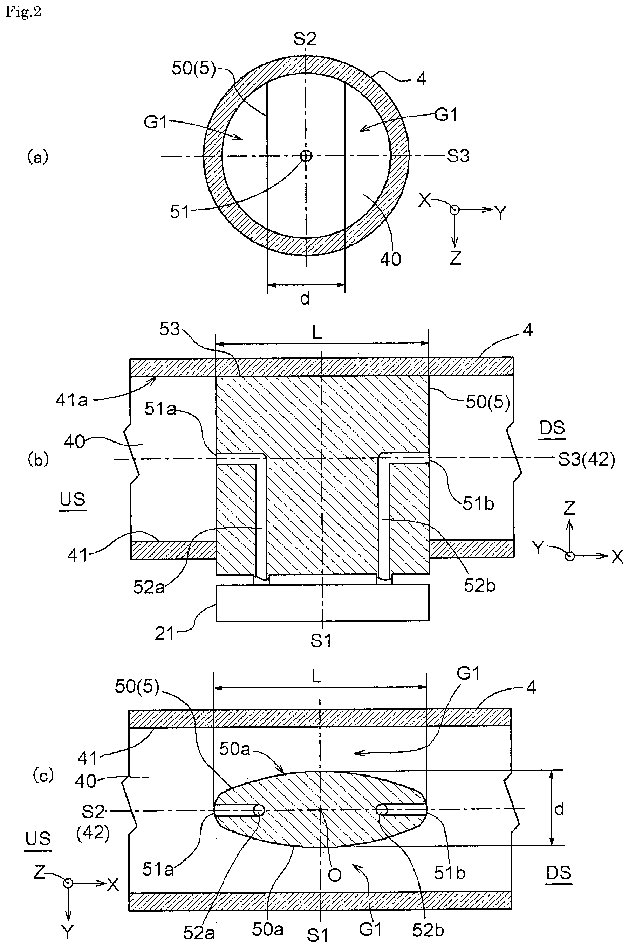

The tube body 4 is a circular tube mounted to a casing 20 so as to penetrate the casing 20 as shown in FIGS. 1 and 2. The tube body 4 includes, in an interior space 40 thereof, a columnar member 5 extending in a direction Z perpendicular to a direction X in which the fluid flows. In the present embodiment, the columnar member 5 is fixed to the tube body 4 while penetrating a tube wall 41 and abutting a leading end 53 thereof on a tube inner surface 41a.

In the present embodiment, as shown in FIG. 2, the columnar member 5 has: a first measurement hole 51a, serving as a first pressure receiver, provided on an upstream side US in the flow direction X; and a second measurement hole 51b, serving as a second pressure receiver, provided on a downstream side DS in the flow direction X. The first and second measurement holes 51a and 51b are positioned on a center axis 42 of the tube body 4. The pressure of the fluid flowing in the space 40 inside the circular tube is highest near the tube axis 42 on the upstream side US of the columnar member 5. In addition, a region near the tube axis 42 on the downstream side DS is more likely to be affected by a slight vacuum caused by turbulent flow. Therefore, by positioning the first measurement hole 51a and the second measurement hole 51b on the center axis 42 of the tube body 4, the differential pressure $\Delta P$ to be measured is increased, whereby the accuracy of the flow rate Q to be calculated using the differential pressure $\Delta P$ is improved.

In addition, since the first and second pressure receivers 51a and 51b for measuring the differential pressure $\Delta P$ are provided in the columnar member 5, it is not necessary to provide a static pressure hole for measuring a static pressure in the tube wall 41 of the tube body 4, in contrast to, for example, a conventional orifice flowmeter provided with a restrictor (orifice) or the back-pressure and differential-pressure type flowmeter disclosed in Patent Document 1 described above. Thus, the size of a straight tube portion, which is required to be provided before and after the pressure receiver 51 for measuring the differential pressure $\Delta P$, can be made equal to about a diameter D of the tube body 4 (it is about 15 times the diameter D in the orifice flowmeter, and about 4 times the diameter D in the back-pressure and differential-pressure flowmeter). Therefore, significant size-reduction and weight-reduction can be achieved as compared to the conventional flow rate measurement devices. In the example of the present embodiment, the overall length of the tube body 4 can be reduced, thereby making the measuring instrument 2 compact.

Furthermore, regarding the columnar member 5, as shown in FIG. 2, a body portion 50 thereof is solid, and tubular first and second communication paths 52a and 52b communicating with the first and second measurement holes 51a and 51b, respectively, are formed in the body portion 50. Since the body portion 50 is solid, strength against the flow of the fluid can be ensured without reducing the measurement accuracy. In addition, manufacture is facilitated as compared to a case of manufacturing a narrow tube, and the strength of the communication path 52 itself can be ensured. To the other ends of the first and second communication paths 52a and 52b, the pressure sensor 21 is connected to measure the differential pressure $\Delta P$.

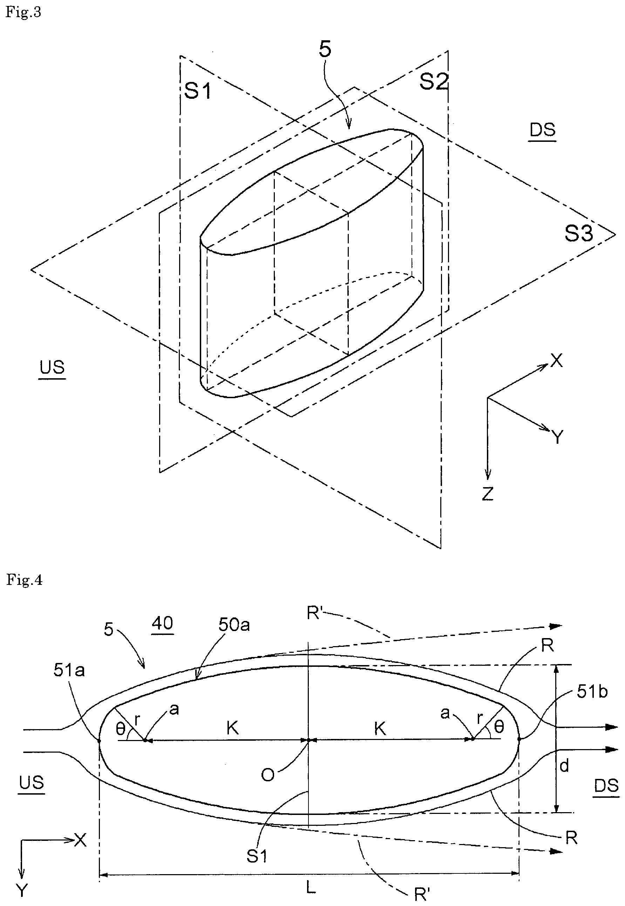

As shown in FIG. 2, the columnar member 5 has a streamline shape that is line symmetric with respect to a first plane S1 that is perpendicular to the center axis 42 of the tube body 4 and passes a center O of a length L, along the flow direction X, of the columnar member 5. In addition, the first measurement hole 51a and the second measurement hole 51b are arranged in line symmetry with respect to the first plane S1. This configuration allows the columnar member 5 to have bidirectionality with respect to the flow direction X of the fluid. Therefore, although the flow direction X of breathing air, which is the fluid of the present embodiment, for expiration is opposite to that for inspiration, it is not necessary to change the device itself or a parameter set B described later. Thus, the differential pressure $\Delta P$ can be measured to calculate the flow rate Q regardless of the flow direction X of the fluid. In addition, the columnar member 5 is line symmetric with respect to a second plane S2 that includes the center axis 42 of the tube body 4 and is parallel to the extending direction Z of the columnar member 5. Since the columnar member 5 is line symmetric with respect to the second plane S2, as shown in FIG. 3, the columnar member 5 as well as a gap G1 between the columnar member 5 and the tube wall 41 are symmetric as viewed in the flow direction X. Therefore, the pressure applied to the columnar member 5 from the fluid is almost uniform at both sides of the second plane S2, whereby durability of the columnar member 5 is improved.

Further, regarding the columnar member 5 having the streamline shape according to the present embodiment, the shape thereof, which is projected onto a third plane S3 perpendicular to the first plane S1 and the second plane S2, has an outer peripheral surface 50a that is defined by the aforementioned expressions 2 and 3. It is assumed that the origin point O is the center of the columnar member 5. The "streamline shape" means that the shape of the columnar member 5 projected onto the third plane S3 is a curve that is smoothly continuous along the flow direction X. In the present embodiment, as shown in FIG. 4, regarding the shape of the outer peripheral surface 50a of the columnar member 5, an end portion on the upstream side US and an end portion on the downstream side DS are arcs each defined by a center angle $\theta$ and a radius a, and the both end portions (arc portions) are connected to each other by smooth curves along the flow direction X. Note that, as shown in FIG. 4, the curves connecting the both end portions are expanded outward as approaching the first plane S1, and are most expanded at intersection points with the first plane S1.

Here, in the flow rate calculation formula according to the above expression 1, the term $c1 \times \eta \times Q$ is referred to as a viscosity term, and the term $c2 \times \rho \times Q^2$ is referred to as an inertial term. If the temperature and the pressure of the fluid are substantially constant, the kinematic viscosity coefficient $\eta$ and the density $\rho$ have constant values in the fluid, so that the relationship in magnitude between the viscous force and the inertial force is the relationship in magnitude between c1 and c2. The parameter set B generated by the parameter generator 34 is a combination of coefficients c1, c2, and c3 in the respective terms of the flow rate calculation formula.

In measuring the differential pressure $\Delta P$, the fluid collides with the columnar member 5 and changes its flow. At this time, depending on the shape of the columnar member 5, the parameters in the viscosity term and the inertial term vary. Specifically, when the width d of the columnar member 5 is increased like a circular shape, the inertial force is increased. On the other hand, when the length L of the columnar member 5 in the down-flow direction is increased like an oval shape, the viscous force is increased. However, if the length L is too long, the columnar member 5 enters a turbulent boundary layer and is affected by transient characteristics of vortex.

Since the viscosity term, which is the first-order term with the flow rate Q being a variable in the flow rate calculation formula according to expression 1, is proportional to the length L of the columnar member 5 in the flow direction X, a gradient N of the flow rate calculation formula satisfies $N = 2 \times c2 \times \rho \times Q + c1' \times \eta \times L$. Therefore, in particular, when the flow rate Q is small (when the differential pressure $\Delta P$ is small), the gradient N can be approximated to $N = c1' \times \eta \times L$, and thus the length L becomes dominant in the gradient N of the flow rate calculation formula. Therefore, the gradient N increases with an increase in the length L, and the calculation accuracy of the flow rate Q is improved when the differential pressure $\Delta P$ is small.

Meanwhile, the inertial term, which is the second-order term in the flow rate calculation formula, is proportional to the cross-sectional area of the columnar member 5 in the flow direction X. Therefore, when the width d of the columnar member 5 is reduced, the length L becomes more dominant in the gradient N of the flow rate calculation formula. In addition, when the width d of the columnar member is reduced, the area occupied by the columnar member 5 in the cross section perpendicular to the flow direction X is small, whereby pressure loss can be reduced.

Meanwhile, in the vicinity of the outer peripheral surface 50a of the columnar member 5, a boundary layer of the fluid is formed along the flow direction X. This boundary layer is a laminar boundary layer caused by laminar flow when the flow rate Q of the fluid is small, and is a turbulent boundary layer caused by turbulent flow when the flow rate Q is large. Furthermore, in the laminar boundary layer, as shown in FIG. 4, a flow R along the outer peripheral surface 50a occurs when the flow rate Q is small, while a flow R' separated from the outer peripheral surface 50a occurs when the flow rate Q is large. That is, as the flow rate Q increases, the boundary layer changes from the unseparated laminar boundary layer (flow R) to the separated laminar boundary layer (flow R') and further changes to the turbulent boundary layer through the transition region. However, the flow rate Q, at which the state of the boundary layer changes, varies depending on the shape of the columnar member 5. That is, when the width d is large, the flow R of the laminar boundary layer is more likely to change to the separated flow R'. When the length L is large, the flow R is less likely to change to the separated flow R'. In addition, when the separated flow R' occurs in the laminar boundary layer, the pressure is reduced (becomes negative pressure) from that point toward the downstream DS of the columnar member 5.

Next, the procedure of measuring a flow rate Q of a fluid by using the flow rate measurement device 1 according to the present embodiment will be described.

First, a fluid is caused to flow in the tube body 4 at already-known different flow rates Q, and differential pressures $\Delta P$ corresponding to the flow rates Q are measured multiple times by the measuring instrument 3 to obtain a whole data group A of the differential pressures $\Delta P$ corresponding to the flow rates Q.

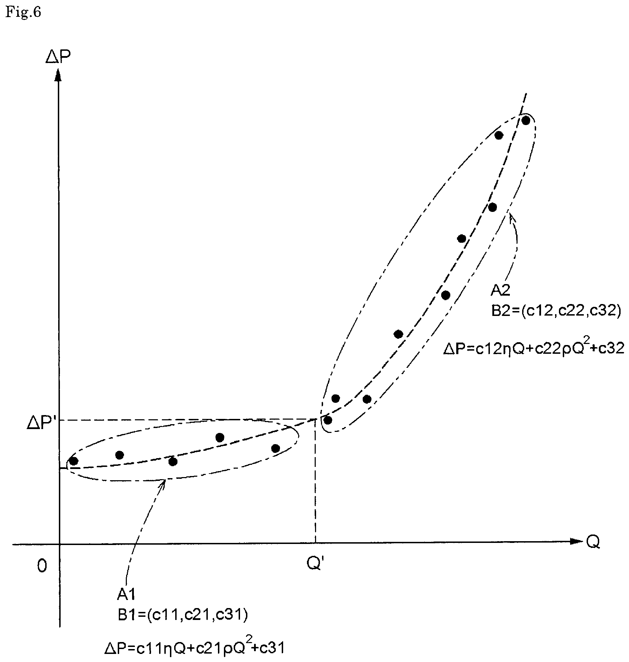

Next, for example, a provisional reference flow rate Q" and a provisional reference differential pressure $\Delta P$" corresponding thereto are determined. Then, data, of the whole data group A, which are positioned in a range smaller than a reference flow rate Q' and a reference differential pressure $\Delta P$' are regarded as a small data group A1, and the other data are regarded as a large data group A2. Then, as shown in FIG. 6, a parameter set B1=(c11,c12,c13) is generated by using the small data group A1, and a parameter set B2=(c21,c22,c23) is generated by using the large data group A2. Further, the flow rate of each data is calculated based on each parameter set B1, B2, and the calculated flow rate is compared with the actual flow rate. With the provisional reference flow rate Q" and the provisional reference differential pressure $\Delta P$" being varied, a provisional reference differential pressure $\Delta P$" at which the rate of concordance between the actual flow rate and the flow rate calculated using the parameter sets B1, B2 is set as the reference differential pressure $\Delta P$'.

After generation of the parameter sets B1 and B2, measurement of actual breathing air is performed as follows. A subject sends expired air from a first end portion 4a of the tube body 4 to a second end portion 4b of the tube body 4. At this time, the pressure sensor 21 measures a differential pressure $\Delta P$ of the expired air at the first and second measurement holes 51a and 51b. The measured differential pressure $\Delta P$ is transmitted and received by the first communication unit 23 and the second communication unit 31, and is input to the data processor 32. Then, the differential pressure determination unit 35 compares the magnitudes of the reference differential pressure $\Delta P$' generated by the parameter generator 34 and the measured differential pressure $\Delta P$. The differential pressure determination unit 35 selects the parameter set B1 when the differential pressure $\Delta P$ is smaller than the reference differential pressure $\Delta P$', and selects the parameter set B2 when the differential pressure $\Delta P$ is larger than the reference differential pressure $\Delta P$'.

Then, the flow rate calculator 35 substitutes the selected parameter set B and the measured differential pressure $\Delta P$ into the flow rate calculation formula to calculate a flow rate Q. The calculated flow rate Q is stored in the storage unit 37 and displayed on the display 33. Since the columnar member 5 of the flow rate measurement device 1 has bidirectionality, inspired air can also be measured as well as the expired air. That is, both the expired air and the inspired air can be measured by the single flow rate measurement device 1 without changing the settings and the like. Note that the flow rate Q may be displayed in any mode on the display 33. For example, the flow rate Q may be displayed as a time course graph having a horizontal axis representing time and a vertical axis representing the flow rate Q, or as an integrated flow rate from start of measurement.

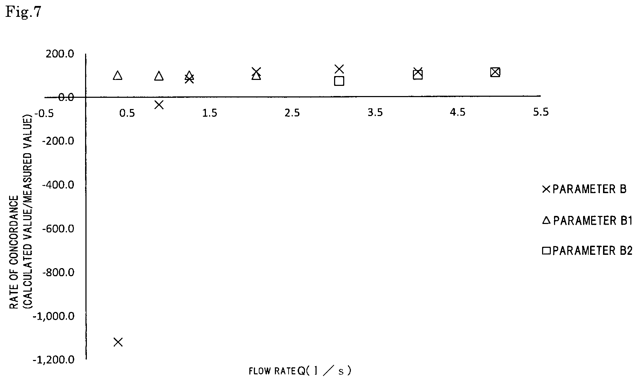

For the purpose of confirming the effectiveness of the present invention, the inventors have compared a case where a differential pressure $\Delta P$ was calculated with only one parameter set B by using the whole data group A and a case where a differential pressure $\Delta P$ was calculated by using two parameter sets B1 and B2. The result is shown in FIG. 7.

As shown in FIG. 7, regarding the parameter set B (marks $\times$ in FIG. 7), the rate of concordance between the measured differential pressure $\Delta P$ and the calculated differential pressure $\Delta P$ is significantly low particularly in a region where the flow rate Q is small. Such a low rate of concordance is considered to be caused by the fluid forming, in the vicinity of the first and second measurement holes 51a and 51b of the columnar member 5, a boundary layer in which the viscous force is more dominant than the inertial force, in contrast to the potential flow in the tube body 4 where the inertial force is dominant. When the flow rate Q is small, the flow R is hardly separated. As the flow rate Q increases, the separated flow R' grows. Since it is considered that the degrees of domination of the viscous force and the inertial force in the flow rate calculation formula are significantly changed depending on whether or not such separation occurs, there is a limit in accurately calculating the flow rate according to each state of flow of the fluid by using only one parameter set B.

On the other hand, in the case where the parameter set to be applied to the flow rate calculation formula is selectable from the parameter sets B 1 and B2 with the reference differential pressure $\Delta P'$ as the boundary, as shown in FIG. 7, the rate of concordance between the measured differential pressure $\Delta P$ and the calculated differential pressure $\Delta P$ is high even in the region where the flow rate Q is small (marks $\triangle$ in FIG. 7 indicate the result of calculation using the parameter B1). Further, even in a region where the flow rate Q is larger than that in the above region (marks $\square$ in FIG. 7 indicate the result of calculation using the parameter B2), the rate of concordance between the measured differential pressure $\Delta P$ and the calculated differential pressure $\Delta P$ is high. Thus, since the two parameter sets B each including the coefficients c1 to c3 of the flow rate calculation formula are generated based on the reference differential pressure $\Delta P'$ and one of the parameter sets is made selectable according to the measured differential pressure, it is possible to calculate the flow rate Q from the differential pressure $\Delta P$ with high accuracy not only in the turbulent flow but also in the laminar flow region and the transition region where the flow rate Q is small.

Finally, possibilities of other embodiments of the present invention will be described. The same members as those of the above embodiment are denoted by the same reference numerals.

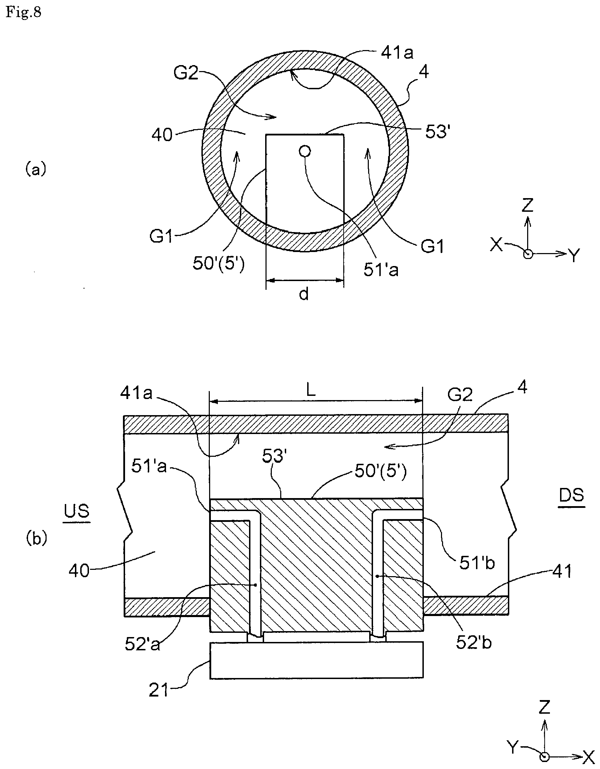

In the above embodiment, the leading end 53 of the columnar member 5 abuts on the tube inner surface 41a (contacts the tube inner surface 41a or is adhered to the tube inner surface 41a). However, the columnar member 5 is not limited thereto, and the leading end 53 need not abut on the tube inner surface 41a. A length L2 of the columnar member 5 in the extending direction Y in the intra-tube space 40 may be smaller than the diameter D of the tube body 4. For example, as shown in FIG. 8, the columnar member may have a length that is a little longer than half the diameter D of the tube body 4 (radius of the tube body 4). When a gap G2 is formed between the leading end 53' and the tube inner surface 41a, the pressure applied to the columnar member 5' from the fluid is reduced, whereby pressure loss can be reduced and durability can be improved. In this case, however, the positions of the first and second measurement holes 51a and 51b are desirably near the axial center of the tube body 4. Thus, reduction in the measurement accuracy can be avoided.

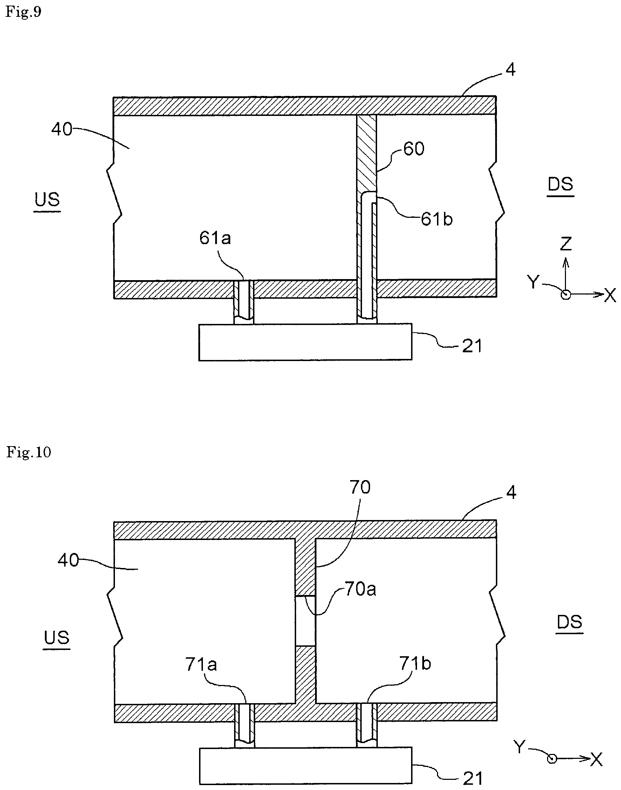

In the above embodiment, the first measurement hole 51'a as the first pressure receiver is provided on the upstream side US of the columnar member 5 while the second measurement hole 51'b as the second pressure receiver is provided on the downstream side DS of the columnar member 5, and the differential pressure $\Delta P$ between the first and second measurement holes 51'a and 51'b is measured. However, each of flowmeters shown in FIGS. 9 and 10 can also calculate a flow rate through the steps of: obtaining a reference differential pressure and generating, with the reference differential pressure being a boundary, two parameter sets each including the coefficients c1 to c3 of the flow rate calculation formula according to the above expression 1; and selecting one of the two generated parameter sets by comparing a measured differential pressure of a fluid as a measurement target with the reference differential pressure.

The flowmeter shown in FIG. 9 is provided with a Pitot tube 60, as a columnar member, which extends in the direction Z perpendicular to the flow direction X of the fluid and does not close the flow path 40. As a first pressure receiver, a first opening 61a is provided through the tube wall 41 of the tube body 4. The Pitot tube 60 is positioned on the downstream side DS in the flow direction X relative to the first opening 61a. As a second pressure receiver, a second opening 61b is provided on the downstream side DS of the Pitot tube 60.

Meanwhile, in the flowmeter shown in FIG. 10, the tube body 4 is provided with, on the tube wall 41, an orifice 70 that has a small opening 70a and reduces the tube path. As a first pressure receiver, a first opening 71a is provided through the tube wall 41 on the upstream side US in the flow direction X of the fluid relative to the orifice 70. As a second pressure receiver, a second opening 71b is provided through the tube wall 41 on the downstream side DS in the flow direction X of the fluid relative to the orifice 70. In the examples of FIGS. 9 and 10, however, the length of a straight tube portion, which is required to be provided before and after the Pitot tube 60/orifice 70 in the flow direction X, is increased. Therefore, the aforementioned embodiment in which the straight tube portion provided before and after the columnar member 5 can be shortened is superior to these examples in that an area (range) where the measurement device is applicable is increased.

Furthermore, in the aforementioned embodiment, the measuring instrument 2 and the processor 3 are provided with the respective communication units so as to be configured as separated units. However, the measuring instrument 2 and the processor 3 may be integrated with each other. For example, a data processor 32, a display 33, and the like can be provided in the measuring instrument 2 itself.

In the aforementioned embodiment, breathing air is described as an example of a fluid. However, the fluid is not limited to breathing air, and may be, for example, medical gas such as oxygen, for a patient, which is equipped on the wall of a hospital room. Of course, the aforementioned embodiment is applicable not only to medical gases but also to other gases and liquids. Furthermore, in a case where the flow rate of a fluid that flows in an already-existing tube is measured, a columnar member included in a measurement device may be inserted into a hole opened through the tube, or the already-existing tube may be cut out and a tube equipped with a columnar member may be connected.

INDUSTRIAL APPLICABILITY

The present invention can be used as a flow rate measurement device and a flow rate measurement method for measuring not only the flow rate (vital capacity) associated with breathing but also the flow rates of various gases and liquids.

DESCRIPTION OF THE REFERENCE CHARACTERS

| | |
|---|---|
| 1 | flow rate measurement device |
| 2 | measuring instrument |
| 3 | processor |
| 4 | tube body (circular tube) |
| 4a | first end portion (introduction portion) |
| 4b | second end portion (open portion) |
| 5 | columnar member |
| 20 | casing |
| 21 | pressure sensor |
| 22 | A/D converter |
| 23 | first communication unit (transmission unit) |
| 31 | second communication unit (receiving unit) |
| 32 | data processor |
| 33 | display |
| 34 | parameter generator |
| 35 | differential pressure determination unit |
| 36 | flow rate calculator |
| 37 | storage unit |
| 40 | intra-tube space (flow path) |
| 41 | tube wall |
| 41a | tube inner surface |
| 42 | center axis (tube axis) |
| 50 | body portion |
| 50a | outer peripheral surface |
| 51 | pressure receiver (measurement hole) |
| 51a | first pressure receiver (first measurement hole) |
| 51b | second pressure receiver (second measurement hole) |
| 52 | communication path |
| 52a | first communication path |
| 52b | second communication path |
| 60 | Pitot tube |
| 61a | first opening |
| 61b | second opening |
| 70 | orifice |
| 71a | first opening |
| 71b | second opening |
| A | whole data group |
| A1 | small data group |
| A2 | large data group |
| B | parameter set |
| $\Delta P$ | differential pressure |
| $\Delta P'$ | reference differential pressure |
| R | unseparated flow |
| R' | separated flow |
| X | flow direction (tube axis direction) |
| Y | orthogonal direction (tube diameter direction) |
| Z | extending direction |
| US | upstream side |

DS   downstream side
S1 to S3  first to third planes

**Claims**

1. A flow rate measurement device comprising a measurement instrument and a processor, the measurement instrument being configured to measure a differential pressure between a first pressure in a first pressure receiver of a tube body in which a fluid flows, and a second pressure in a second pressure receiver of the tube body, the processor being configured to calculate a flow rate of the fluid on the basis of a measured differential pressure,
the processor comprising:

  a parameter generator configured to

    obtain a reference differential pressure in a flow rate calculation formula according to expression 1 as follows, on the basis of a plurality of already-known flow rates and measured differential pressures corresponding to the respective already-known flow rates, and
    generate two parameter sets each including coefficients c1 to c3 of the flow rate calculation formula, with the reference differential pressure being a boundary;

  a differential pressure determination unit configured to select one of the two generated parameter sets by comparing a measured differential pressure of a fluid as a measurement target with the reference differential pressure; and
  a flow rate calculator configured to calculate a flow rate of the fluid by substituting the selected parameter set and the measured differential pressure into the flow rate calculation formula:

$$\Delta P = c1 \times \eta \times Q + c2 \times \rho \times Q^2 + c3 \cdots \text{(expression 1)}$$

  (Q: flow rate, $\Delta$P: differential pressure, $\eta$: coefficient of kinematic viscosity, $\rho$: density, c1 to c3: coefficients)

2. The flow rate measurement device according to claim 1, wherein
the tube body includes, inside thereof, a columnar member extending in a direction perpendicular to a flow direction of the fluid,
the first pressure receiver is a first measurement hole provided on an upstream side, in the flow direction, of the columnar member, and the second pressure receiver is a second measurement hole provided on a downstream side, in the flow direction, of the columnar member,
the columnar member has a streamline shape that is line symmetric with respect to a first plane that is perpendicular to a center axis of the tube body and passes the center of a length, along the flow direction, of the columnar member, and
the first measurement hole and the second measurement hole are arranged in line symmetry with respect to the first plane.

3. The flow rate measurement device according to claim 1 or 2, wherein the columnar member is line symmetric with respect to a second plane that includes a center axis of the tube body and is parallel to the direction along which the columnar member extends.

4. The flow rate measurement device according to claim 3, wherein
the columnar member, which is projected on a third plane that is perpendicular to the first plane and the second plane, has a shape with an outer peripheral surface that is defined by expression 2 and expression 3 as follows:

$$L = 2(K + r) \cdots \text{(expression 2)}$$

$$d = 2(K(1/\cos\theta - \tan\theta) + r) \cdots \text{(expression 3)}$$

(O: origin point, d: width of the columnar member, L: length of the columnar member in the flow direction, r: radius of an arc centered around point a that is ±K away from the origin point O in the flow direction, θ: center angle of the arc/2)

5. The flow rate measurement device according to any one of claims 2 to 4, wherein a length of the columnar member in the direction along which the columnar member extends in the tube body is smaller than a diameter of the tube body.

6. The flow rate measurement device according to any one of claims 2 to 5, wherein the first measurement hole and the second measurement hole are positioned on the center axis of the tube body.

7. The flow rate measurement device according to any one of claims 2 to 6, wherein the columnar member is solid, and tubular communication paths communicating with the first measurement hole and the second measurement hole are formed in the columnar member.

8. The flow rate measurement device according to any one of claims 1 to 7, wherein the fluid is breathing air.

9. The flow rate measurement device according to any one of claims 1 to 7, wherein the fluid is medical gas.

10. The flow rate measurement device according to claim 1 further comprising a columnar member extending in a direction perpendicular to a flow direction of the fluid, wherein
the first pressure receiver is a first opening provided through a tube wall of the tube body,
the columnar member is positioned on a downstream side in the flow direction relative to the first opening, and
the second pressure receiver is a second opening provided on the downstream side of the columnar member.

11. The flow rate measurement device according to claim 1, wherein
the tube body has, on a tube wall, an orifice that reduces a tube path,
the first pressure receiver is a first opening provided in the tube wall on an upstream side in a flow direction of the fluid relative to the orifice, and
the second pressure receiver is a second opening provided in the tube wall on a downstream side in the flow direction of the fluid relative to the orifice.

12. A flow rate measurement method for measuring a differential pressure between a first pressure in a first pressure receiver of a tube body in which a fluid flows and a second pressure in a second pressure receiver of the tube body, and calculating a flow rate of the fluid on the basis of a measured differential pressure, the method comprising:

causing a fluid to flow in the tube body at a plurality of already-known flow rates;
obtaining a reference differential pressure in a flow rate calculation formula according to expression 4 as follows, on the basis of the plurality of already-known flow rates and measured differential pressures corresponding to the respective already-known flow rates, and generating two parameter sets each including coefficients c1 to c3 of the flow rate calculation formula, with the reference differential pressure being a boundary;
causing a fluid as a measurement target to flow in the tube body;
selecting one of the two generated parameter sets by comparing a measured differential pressure of the fluid as the measurement target with the reference differential pressure; and
calculating a flow rate of the fluid by substituting the selected parameter set and the measured differential pressure into the flow rate calculation formula:

$$\Delta P = c1 \times \eta \times Q + c2 \times \rho \times Q^2 + c3 \cdots \text{(expression 4)}$$

(Q: flow rate, ΔP: differential pressure, η: coefficient of kinematic viscosity, ρ: density, c1 to c3: coefficients)

Fig.1

Fig.2

(a)

(b)

(c)

Fig.3

Fig.4

Fig.5

Fig.6

$$\Delta P = c12\eta Q + c22\rho Q^2 + c32$$

A2
B2=(c12,c22,c32)

A1
B1=(c11,c21,c31)

$$\Delta P = c11\eta Q + c21\rho Q^2 + c31$$

Fig.7

Fig.8

(a)

(b)

Fig.9

Fig.10

## INTERNATIONAL SEARCH REPORT

International application No.

PCT/JP2018/012821

### A. CLASSIFICATION OF SUBJECT MATTER
Int.Cl. G01F1/34(2006.01)i

According to International Patent Classification (IPC) or to both national classification and IPC

### B. FIELDS SEARCHED

Minimum documentation searched (classification system followed by classification symbols)
Int.Cl. G01F1/34-1/50, G01F15/02-15/04, G01P5/14-5/175

Documentation searched other than minimum documentation to the extent that such documents are included in the fields searched
| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-134180 A (COSMO INSTRUMENTS CO., LTD.) 08 July 2013, entire text, all drawings (Family: none) | 1-12 |
| A | US 2010/0191481 A1 (STEVEN, R.) 29 July 2010, entire text, all drawings & GB 2453704 A & WO 2008/025935 A1 | 1-12 |
| A | JP 2010-101738 A (YAZAKI CORPORATION) 06 May 2010, entire text, all drawings (Family: none) | 1-12 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07.06.2018 | 19.06.2018 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/012821

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2005-147682 A (SHIMADZU CORPORATION) 09 June 2005, entire text, all drawings (Family: none) | 1-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3200638 B